(19) Europäisches Patentamt
European Patent Office
Office européen des brevets

(11) EP 3 025 099 B1

(12) # EUROPEAN PATENT SPECIFICATION

(45) Date of publication and mention of the grant of the patent:
**26.12.2018 Bulletin 2018/52**

(21) Application number: **14742324.8**

(22) Date of filing: **17.07.2014**

(51) Int Cl.:
***G05D 23/19*** (2006.01)
***F24D 19/10*** (2006.01)
***G05B 15/02*** (2006.01)
***G06Q 10/06*** (2012.01)
***G06Q 50/06*** (2012.01)
***F24F 11/30*** (2018.01)
***F24F 11/62*** (2018.01)

(86) International application number:
**PCT/GB2014/052181**

(87) International publication number:
**WO 2015/011446 (29.01.2015 Gazette 2015/04)**

(54) **CONTROL DEVICE AND METHOD FOR BUILDINGS**

STEUERUNGSVORRICHTUNG UND -VERFAHREN FÜR GEBÄUDE

DISPOSITIF ET PROCÉDÉ DE COMMANDE POUR BÂTIMENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2013 GB 201313223**

(43) Date of publication of application:
**01.06.2016 Bulletin 2016/22**

(73) Proprietor: **University Court of Glasgow Caledonian University**
**Glasgow G4 OBA (GB)**

(72) Inventors:
- **LARIJANI, Hadi**
  **Glasgow G4 0BA (GB)**
- **AHMADINIA, Ali**
  **Glasgow G4 0BA (GB)**
- **EMMANUEL, Rohinton**
  **Glasgow G4 0BA (GB)**
- **JAVED, Abbas**
  **Glasgow G4 0BA (GB)**

(74) Representative: **McGlashan, Graham Stewart**
**Marks & Clerk LLP**
**Aurora**
**120 Bothwell Street**
**Glasgow G2 7JS (GB)**

(56) References cited:
**EP-A1- 2 336 834**
**WO-A1-2007/128783**
**US-A1- 2011 060 425**

- **MOZER M C ET AL: "THE NEUROTHERMOSTAT:PREDICTIVE OPTIMAL CONTROL OF RESIDENTIAL HEATING SYSTEMS", ADVANCES IN NEURAL INFORMATION PROCESSING SYSTEMS 9 : PROCEEDINGS OF THE 1996 CONFERENCE ; [PAPERS PRESENTED AT THE TENTH ANNUAL CONFERENCE ON NEURAL INFORMATION PROCESSING SYSTEMS (NIPS), HELD IN DENVER, COLORADO FROM DEC. 2 TO DEC. 5, 1996.], MIT P, 1 January 1997 (1997-01-01), pages 953-959, XP002577900, ISBN: 978-0-262-10065-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 025 099 B1

Printed by Jouve, 75001 PARIS (FR)

## Description

FIELD OF THE INVENTION

The present invention relates to a control device and associated method for controlling systems for providing building services, such as but not limited to heating, cooling, ventilation, lighting and the like.

BACKGROUND TO THE INVENTION

With concerns about high fuel costs and the environment increasing, and with many cost effective alternative energy production technologies still in development, interest is being shown in techniques for improving energy efficiency and reducing energy consumption. In particular, the energy used in maintaining environmental conditions within buildings, such as heating, cooling, lighting and ventilation, represents a significant potential opportunity for saving energy and thereby cost.

Many environmental management systems for buildings (sometime referred to as building management systems) rely on a single sensor or only a few sensors. Furthermore, it is not uncommon for only a single type of sensor to be used, e.g. temperature sensors. The environmental management systems then control one of the building's systems, such as a heating or air conditioning system, to a set point, based on the measurements made using the sensors or limited set of sensors.

At least one embodiment of the present invention seeks to provide improved control of building environments and/or solve or mitigate at least one problem with the prior art.

WO2007/128783 describes a controller for optimizing energy consumption. The controller operates in a building having a heating system monitored and controlled by a building management system (BMS). The controller gathers building environmental conditions data from the BMS system and weather data from the weather provider. The building environmental conditions data and the weather data are in turn applied to a plurality of intelligent control technique units which each provide a proposed BMS control input based on the building environmental conditions data and the weather data. The intelligent control techniques comprise neural network techniques, genetic algorithm techniques and fuzzy logic techniques. It is possible to choose the most accurate intelligent control technique for use in a particular environmental condition. A weighting may be assigned to each intelligent control technique so that a weighted average of each of the intelligent control techniques based on their historical accuracy may be provided, or as an alternative, it may be preferable to simply provide the most accurate of each of the intelligent control techniques without providing a weighted average.

EP2336834 describes a system for controlling environmental conditions that utilizes a neural algorithm, such as a self-learning algorithm, to learn how much time it typically takes for the user to arrive after leaving workplace, so that the system can anticipate and optimize the optimal rate for changing the environmental conditions, or to determine how much time it takes typically to warm the environment.

Mozer et. al. in "The Neurothermostat: Predictive Optimal Control of Residential Heating Systems", Adv. In Neral Info. Proc. Systems 9 (pp 953-959) Cambridge, MA: MIT Press 1997, describe a Neural Network House that has been outfitted with over 75 sensors and actuators to control air heating, water heating, lighting and ventilation

SUMMARY OF THE INVENTION

Various aspects of the present invention are defined in the independent claims. Some preferred features are defined in the dependent claims.

According to a first aspect of the present invention there is provided a controller for controlling at least one service apparatus for a building or one or more parts of a building, the controller comprising:

at least one input interface for receiving a plurality of input variables associated with the building or the one or more parts of the building;
at least one output interface for interfacing with the at least one service apparatus; and
processing apparatus configured to process the plurality of input variables using one or more random neural networks in order to generate one or more control parameters for controlling the at least one service apparatus.

The plurality of input variables may comprise one or more environmental conditions associated with the building or the one or more parts of the building, such as temperature, humidity, solar radiation levels, light levels, air flow and/or the like. The environmental conditions may comprise conditions inside and/or outside of the building or the one or more parts of the building.

The at least one service apparatus may comprise environmental control apparatus, such as one or more thermostatic radiator valves, central heating boilers, air conditioning units, heating, ventilation and air conditioning units, building management systems and/or the like.

The controller or processing apparatus may comprise, be configured to use or implement a plurality of random neural networks. The controller or processing apparatus may comprise, be configured to use or implement a selector for selecting a random neural network from the plurality of neural networks dependent on the part of the building associated with the input variables.

The selector may be configured to select a random neural network specific or tailored to the part of the building associated with at least one and preferably each of the input variables in order to generate one or more control parameters for controlling the at least one service apparatus associated with that part of the building. For example, each random neural network may be at least initially trained with historical input variables and/or historical control parameters for the associated part of the building.

At least one and preferably each of the random neural networks may be associated with parts of the building having one or more properties meeting one or more criteria. The selector may be configured to select the random neural network based on matching the properties of the part of the building associated with the input variables or to which the input variables relate to the one or more criteria.

The one or more parts of the building may comprise portions of the building, rooms and/or groups of rooms. The parts of the building may comprise groups of rooms linked by the one or more criteria. The criteria may specify one or more room property such as one or more room dimensions, orientation of the room, aspect of the room and/or number, size and/or positions of windows in the room. The criteria may specify a range of room properties.

At least one of the input interfaces may comprise one or more sensor interfaces for receiving measurements from at least one and preferably a plurality of sensors. At least one of the input variables may comprise or be derived from the measurements received from the plurality of sensors.

At least one of the sensor interfaces may comprise a wireless interface, such as a wi-fi, Bluetooth$^{RTM}$, ZigBee$^{RTM}$, IR or near field communications interface or the like. At least one of the sensor interfaces may comprise a wired or cabled interface, which may optionally comprise a powerline connection. At least one of the sensor interfaces may comprise an interface for allowing at least one of the sensors to be releasably connected and disconnected to the interface. In an alternative or additional embodiment, at least one of the sensors may be comprised in, hardwired to and/or permanently connected to the controller, i.e. the controller may comprise an integral or hardwired sensor.

One or more of the sensors may comprise an environmental condition sensor such as at least one of a temperature sensor, a humidity sensor, a pressure sensor, a moisture sensor, a light or solar radiation sensor, a wind or airflow sensor, and/or the like. At least one of the sensors may be provided within the building, e.g. an indoor sensor. At least one of the sensors may be provided outwith the building, e.g. an outdoor sensor.

The controller may comprise a plurality of sensor interfaces, each sensor interface being configured to interface with sensors provided in different rooms or groups of rooms of the building and/or different locations outwith the building.

At least one of the input interfaces may comprise a user interface. The user interface may be configured to receive one or more user input, such as user inputs specifying or selecting at least one of the environmental conditions. The user inputs may comprise commands or other control parameters for the one or more building systems, such as temperature set points, operation times and/or durations, operational speeds or outputs, and the like. The user interface may comprise a touch screen.

The user interface and/or controller may comprise or be comprised in or be configured to communicate with a mobile communications and/or processing device, such as a mobile smartphone, tablet computer, laptop computer, and/or another suitable smart system, such as a smart TV, games console, watch or the like.

At least one of the input interfaces may comprise an interface or connection to a weather information system or database. The interface or connection to a weather information system or database may be configured to receive weather related data associated with the building or an area in which the building is situated. The weather information system or database may be a remote system or database and may be accessible through a network. The weather information system or database may be comprised in the controller and the interface or connection to the weather information system or database may be an integral, hardwired and/or permanently connected connection. At least one of the plurality of input variables may comprise or be derived from the weather related data.

The controller may comprise or be configured to access a database. The database may be comprised in the controller, physically connected to the controller or remote from the controller and accessed through a network, wireless, wired or other connection. The database may comprise a database for storing one or more historical input variable and/or environmental conditions and/or control parameters for the at least one service apparatus. At least one of the input interfaces may comprise an interface or connection to the database and/or at least one of the plurality of input variables may comprise historical data derived from data stored by the database.

The controller or processing apparatus may comprise, implement or be configured to access at least one predictor for predicting at least one future input variable or environmental condition associated with the building. For example, the future environmental condition may comprise at least one of temperature, humidity, light levels, and/or the like. The output of the predictor may comprise or be comprised in or be usable to derive one or more of the plurality of input variables. The predictor(s) may be configured to use one or more random neural network models in order to predict the at least one future environmental condition.

At least one and preferably each predictor may be associated with a respective part of the building, such as a room or group of rooms. The at least one and preferably each predictor may be configured to predict at least one future environmental condition for the associated part of the building.

Each predictor may comprise or implement a random neural network that is specific for the associated part of the building. For example, the random neural network used by a predictor for a part of the building may be at least initially trained using historical environmental conditions and/or control parameters associated with the relevant part of the building.

The controller or processing apparatus may comprise, implement or be configured to access one or more optimisers, wherein each optimiser may use one or more random neural networks to calculate optimal control parameters for the at least one service apparatus. The input variables for the random neural network of the optimiser(s) may comprise at least one and optionally each of indoor environmental conditions such as the temperature, humidity, air flow and/or solar radiation or light levels in one or more rooms or groups of rooms, one or more outdoor conditions such as solar radiation levels, humidity, temperature, air speed, wind direction, precipitation levels and/or the like, user inputs, the at least one future parameter predicted by the future parameter predictor, and/or one or more historical input variables and/or parameters stored in the database. The output of the random neural network of the optimiser(s) may comprise or be usable to derive one or more control parameters of the at least one service apparatus.

The controller or processing apparatus may comprise or be configured to implement a plurality of optimisers, wherein each optimiser is associated with a part of the building meeting at least one common specified or pre-set criteria. The random neural network used by the respective optimiser may be associated with or specific to the part of the building. For example, the random neural network used in an optimiser for a part of the building may be at least initially trained using historical environmental conditions and/or control parameters associated with the relevant part of the building. Each optimiser may be configured to output one or more control parameters of the at least one service apparatus associated with the relevant part of the building.

At least one and preferably each of the random neural networks may comprise a feed-forward random neural network.

The processing apparatus may comprise a processor and optionally may comprise or be configured to access memory such as RAM, ROM, DRAM, flash memory and the like.

The processing apparatus may be configured to receive the plurality of input variables from the at least one input interface and/or output control parameters for the at least one component of the one or more building systems to the output interface.

The controller may be configured to monitor energy usage. The building system controller may be comprised in or configured to communicate with a smart meter.

The above solution provides a computationally efficient controller that is scalable for large buildings. In addition, it allows the controller to be embedded in a more compact and less expensive apparatus.

The use of a random neural networks rather than other logic techniques can result in more detailed information on the system state and provide a more compact and elegant representation for its steady state behaviour. In embodiments, use of random neural networks provide unique solutions for non-linear signal flow equations when the random neural networks networks have a feed-forward structure, which can result in a more stable and reliable controller.

In addition, the run time of a controller using a random neural network has been advantageously and surprisingly found to out perform other logic methods, such as analogue neural networks, in total calculation time.

According to a second aspect of the present invention is a method of controlling at least one service apparatus for a building or one or more parts of a building, the method comprising:

receiving a plurality of input variables or environmental conditions associated with the building or the one or more parts of the building; and

processing the plurality of input variables or environmental conditions using at least one random neural network in order to generate one or more control parameters for controlling the at least one service apparatus.

The method may be implemented using or by a controller according to the first aspect. The method may comprise performing at least one action corresponding to a feature described in relation to the first aspect and/or use or comprise operation of a feature described in relation to the first aspect.

According to a third aspect of the present invention is an environmental management system for a building, the environmental management system comprising a controller according to the first aspect.

The environmental management system may further comprise one or more sensors and/or one or more sensor interfaces. The system may further comprise at least one environmental control apparatus. The system may comprise a database. The system may comprise at least one interface or connection to a weather information system.

According to a fourth aspect of the present invention is a computer program product configured to implement the method of the second aspect.

According to a fifth aspect of the present invention is a processing apparatus when programmed with the computer program product of the fourth aspect.

According to a sixth aspect of the present invention is a carrier medium comprising, storing or encoding the computer program product of the fourth aspect.

Features described in relation to any of the above aspects may also be applicable to any of the other above aspects. Features described in combination in relation to any of the above aspects may be jointly or individually and seperably applicable to any other of the above aspects. Apparatus features corresponding to those described above in relation to a method and also method features corresponding to the use and fabrication of any apparatus features described above are also intended as falling within the scope of the present invention.

## BRIEF DESCRIPTION OF THE DRAWINGS

These and other aspect of the present invention will now be described, by way of example only, with reference to the accompanying drawings, in which:

Figure 1 shows a schematic of an environmental management system architecture for a building according to an embodiment of the present invention;
Figure 2 shows a schematic of an environmental management system implementation for a building according to an embodiment of the present invention;
Figure 3 shows a flow chart illustrating a method of operation of an environmental management system according to an embodiment of the present invention;
Figure 4 shows a schematic of an environmental management system architecture for a building according to an embodiment of the present invention, for example, for a large building);
Figure 5 shows a flow chart illustrating a method of operation of an environmental management system according to an embodiment of the present invention;
Figure 6 shows a schematic illustrating an example of a random neural network model that could be used in the systems of Figures 1, 2 and 4; and
Figure 7 shows a schematic of an example of a sensor arrangement for use with the systems of Figures 1, 2 and 4.

## DETAILED DESCRIPTION OF THE DRAWINGS

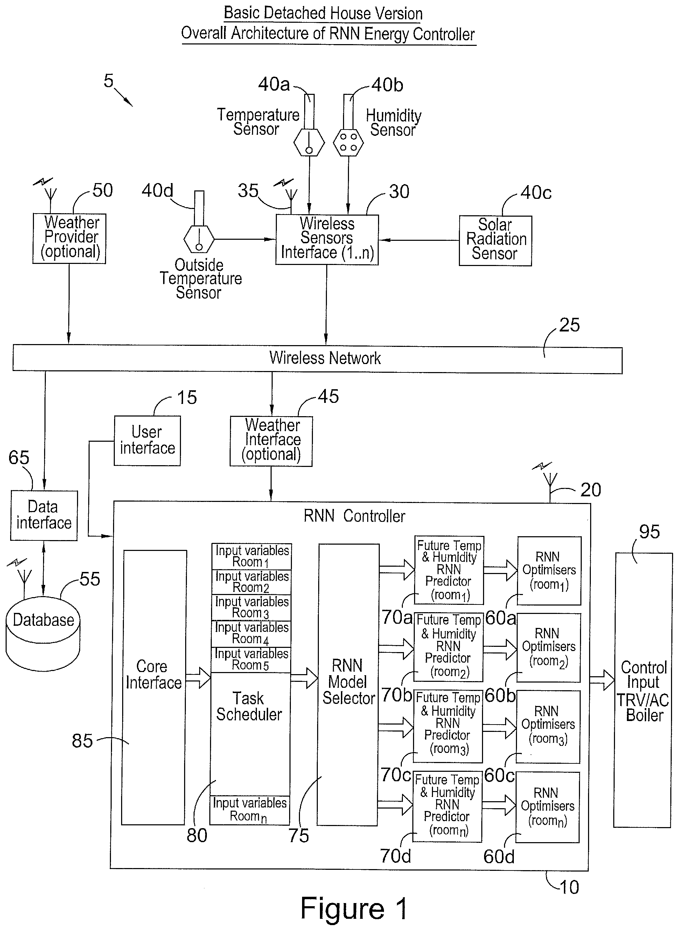

Figure 1 shows a generic example of an environmental management system 5 for a building according to an embodiment of the present invention.

The system 5 comprises a controller 10 for controlling at least one parameter of the building environment. The controller 10 receives a plurality of input variables, such as user inputs and/or measurements of environmental parameters such as temperature, humidity and solar levels. The controller 10 processes the input variables using one or more random neural network models in order to determine control parameters for controlling environmental control apparatus such as thermostatic radiator valves (TRVs), a central heating boiler and/or HVAC (heating ventilation and air conditioning) or AC (air conditioning) controllers in order to optimise the environmental conditions of the building.

The controller 10 is provided with a user interface 15 such as a touch screen and a communication module 20, which in this example comprises a wireless communications module for communicating with other components of the control system over the wireless network 25.

The user interface 15 allows the user to provide user input to the controller 10. Examples of the user inputs include selecting set points such as temperature or humidity set points. The user input can also comprise input variables that can be used by the controller 10 to determine the optimal control parameters. An example of a suitable input interface 15 is a touchscreen interface running on an Android[RTM] operating system.

The system 5 also comprises a plurality of (in this case n) sensor interfaces 30. Each sensor interface 30 comprises a wireless communication interface 35 configured to communicate with the controller 10 over the wireless network 25.

A plurality of sensors 40a, 40b, 40c, 40d are selectively coupled to each sensor interface 30. In embodiments, the types of sensor 40a-d can be the same or different between sensor interfaces 30. Some examples of suitable sensors include at least one of a temperature sensor 40a for measuring an indoor temperature Tin, a humidity sensor 40b for measuring a humidity RH, a solar radiation sensor 40 c for measuring solar radiations entering a room or area and an outside temperature sensor 40 d for measuring outside temperature (i.e. ambient temperature).

Each sensor interface 30 is optionally associated with a different area of the building, such as a room, group of rooms or an area immediately outside of the building. Each sensor 40a-40d connected to one of the interfaces 30 is configured to measure one or more environmental conditions for the measurement area associated with that sensor interface 30.

For example, for a building having n rooms, then n sensor interfaces can be provided, which are respectively connectable to n indoor temperature sensors 40a, n humidity sensors 40b, n solar radiation sensors 40c for monitoring the solar radiation levels $Ts_{i=1...n}$ in each room and an outdoor temperature sensor for determining an outdoor temperature Tout in the vicinity of the room. The indoor temperature sensors 40a output a temperature $Tin_{i=1...n}$ for the associated room. The humidity sensors 40b output a humidity $RH_{i=1...n}$ for the associated room. The measured environmental conditions can then be provided as input variables to the controller 10 and used to determine optimal control parameters.

The controller 10 also comprises a weather interface 45 configured to access a weather information provision system 50 over the network 25. In this way, the controller 10 can access information regarding the weather being experienced or forecast to be experienced by the building, which can then be used as input variables to the controller 10 for determining the optimal control parameters.

The control system 5 comprises a database 55 that is linked via a wireless network agent to a data interface 65. The data interface 65 is in communication with the controller 10 and other input interfaces, such as the sensor interfaces 30 and the weather interface 45, via the network 25 such that archived and historical data from the input interfaces 35, 45 and input variables and control parameters output from the controller, along with information identifying the associated area of the building, can be collected and stored in the database 55. The controller 10 is configured to access the database 55 so that the historical and/or archived data can be used as input parameters in determining the optimal control parameters. For example, the database 55 is configured to communicate with the sensor interfaces 30 and the weather interface 45 so as to receive and store the one or more environmental parameters measured by the sensors 40a-d and/or the weather information, which can then be used to archive these input variables and also to provide the data in real time. Other data that could be used as input variables for the controller 10, such as building map information, can also be stored in the database 55.

Advantageously, the archived or historical and/or real time data stored in the database 55 can be used to train the random neural networks used by the controller 10. Particularly, the archived or historical data associated with each area of the building can be used to train respective random neural networks used by the controller 10, such that the random neural networks are tailored or specific to the relevant area of the building.

The controller 10 comprises a plurality of optimisers 60a-d for determining optimal control parameters for the environmental control apparatus 95 for the building, a plurality of predictors 70a-d for predicting future input variables, a model selector 75 for receiving and transmitting input variables to appropriate predictors 70a-d and optimisers 60a-d, a task scheduler 80 for scheduling jobs for the predictors 70a-d and optimisers 60a-d and a core interface 85 for receiving input variables from the various input collection means such as the sensor interfaces 30, the weather information provision system 50, the user interface 15 and the database 55.

The input variables, such as the measured temperature $Tin_{i=1...n}$ for each room, the humidity $RH_{i=1...n}$ for each room, the solar radiation levels $Ts_{i=1...n}$ in each room and the outdoor temperature Tout, weather data or forecasts from the weather information provision system 50, any archived or historical data from the database, building map information such as size, orientation and locations of each room, user inputs and the like, are received by the core interface 85 over the wireless network 25 via the communications controller 20.

The input variables are then communicated from the core interface 85 to the task scheduler 80. The task scheduler 80 schedules jobs for the predictor(s) 70a-d and optimiser(s) 60a-d. The input variables for each room are identified and queued in the task scheduler 80, which then transmits the required input variables for each room to the model selector 75 on a first in first out basis.

The model selector 75 is configured to forward the input variables to an appropriate predictor 70 and/or optimiser 60a-d.

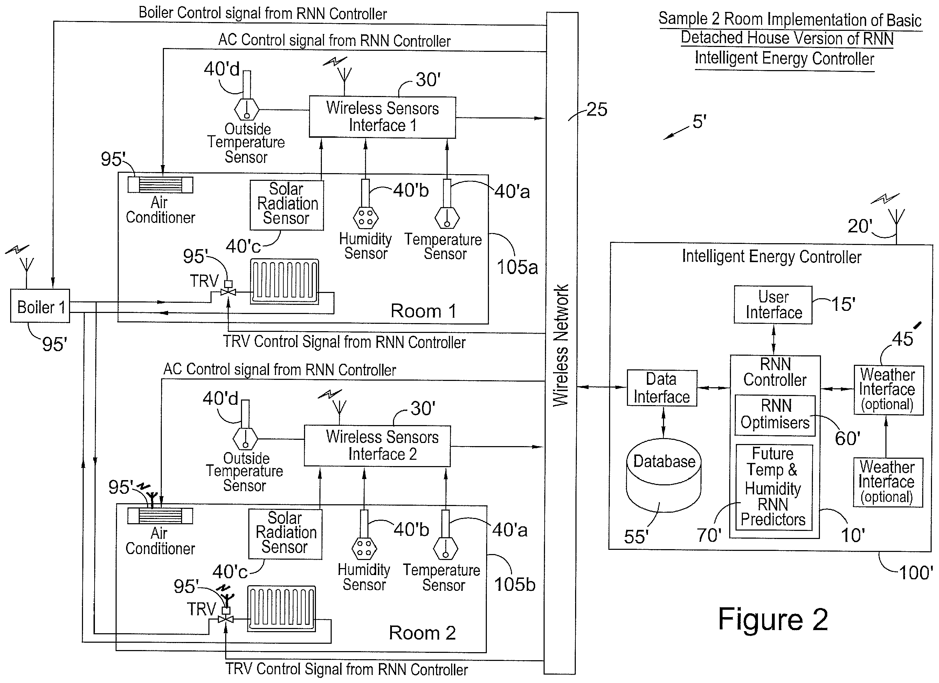

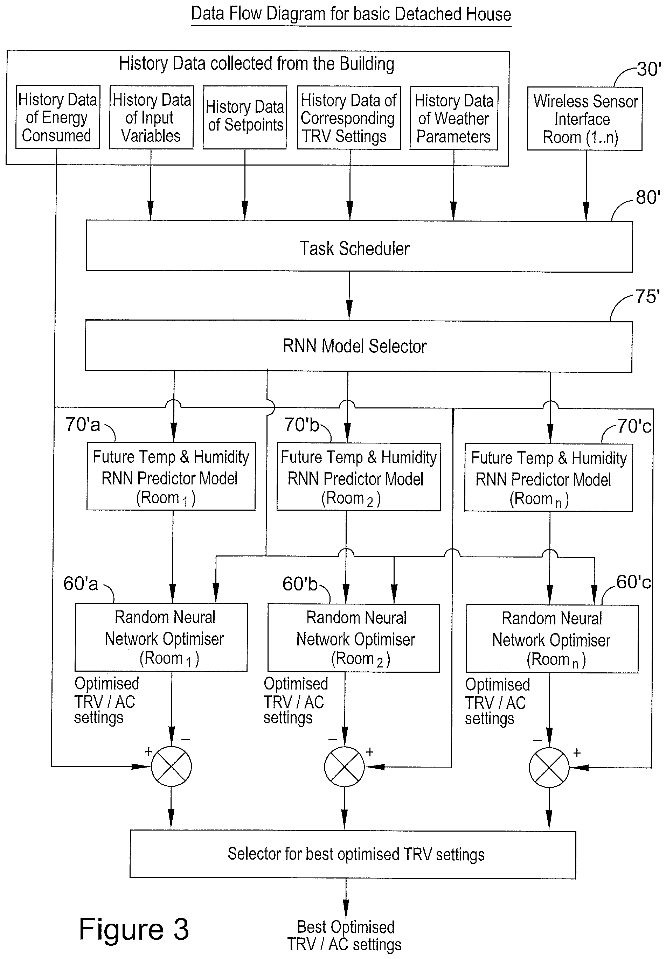

For example, in an embodiment of the present invention shown and described with reference to Figures 2 and 3 (which can be particularly suitable for use in a small buildings), the model selector 75 receives the input parameters for a particular room and a room identifier from the task scheduler and transmits the input parameters for that room to the associated predictor and optimiser trained for that room.

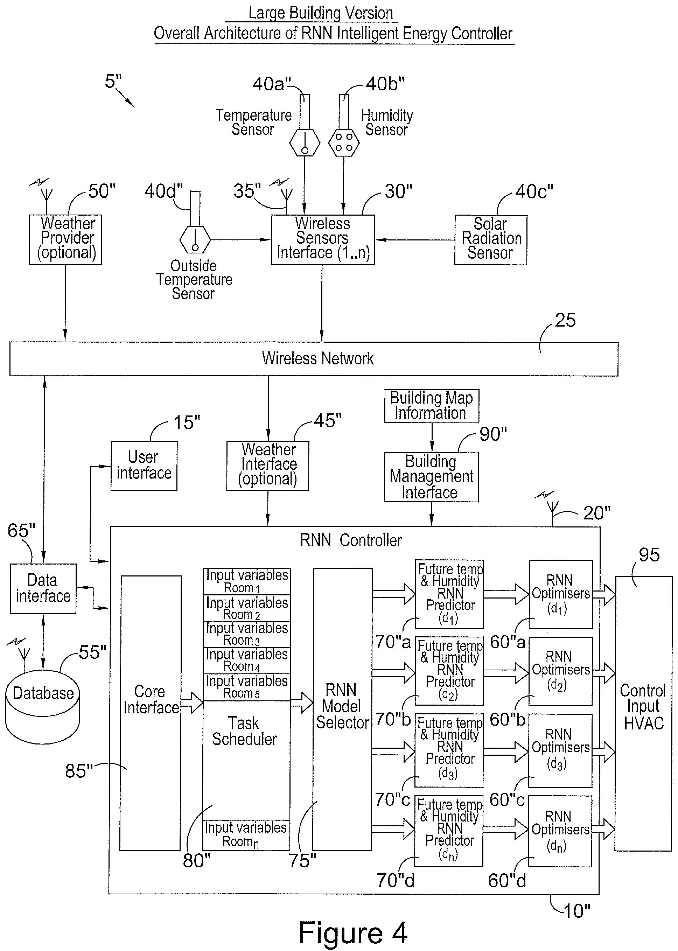

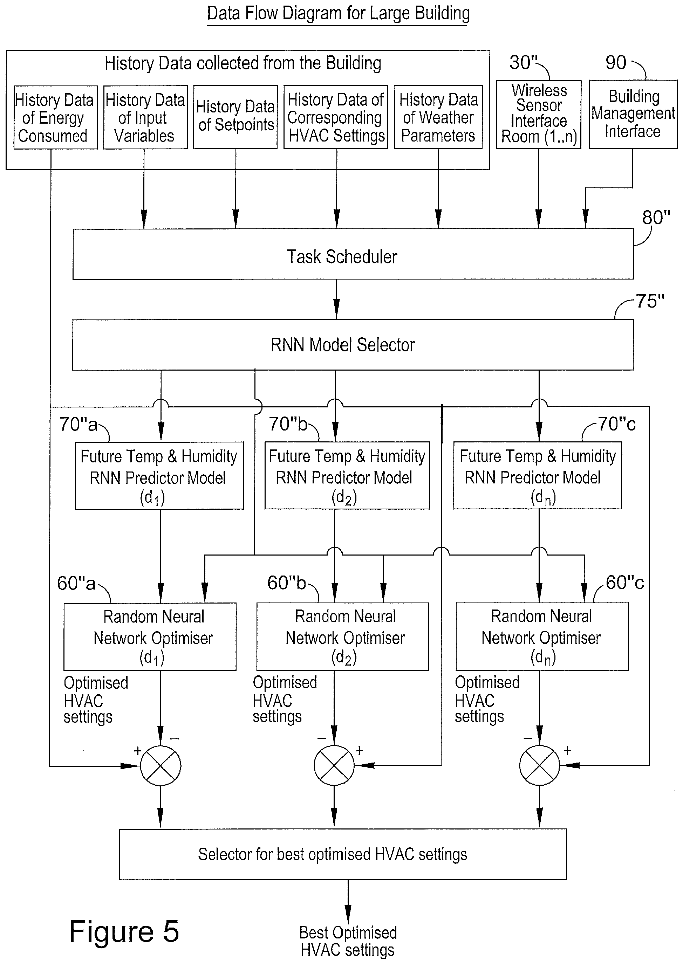

In an embodiment of the present invention shown and described in relation to Figures 4 and 5 (which may be particularly suited for use in large buildings), the model selector 75 receives the input variables for each room, along with room properties, such as the number of rooms and/or dimensions, orientation, aspect, and/or location of the room and/or the number, location and/or size of the windows and/or the like, from the task scheduler 80. Rooms having the same or similar room properties are grouped together and share a common predictor 70a-d and/or optimiser 60a-d rather than having an individual predictor and/or optimiser for each individual room.

In this case, the system 5" comprises a building management interface 90 for interfacing with a building management or information system in order to obtain room properties and/or a building map that comprises or can be used to derive the room properties. The model selector 75 of the system 5" is configured to determine the group to which the room belongs from the room properties and/or building map and assigns the input variables to the appropriate predictor 70a-d and/or optimiser 60a-d.

Therefore, in the exemplary embodiments described above, individual predictors 70a-70d are provided and are tailored or specific for each room in the small building system 5' illustrated by Figures 2 and 3 and for each group of rooms having the same or similar room properties for the large building system 5" illustrated with respect to Figures 4 and 5.

In this way, for example, if there are m rooms or m groups of rooms, as appropriate, then there will be m predictors. Each predictor 70a-70d predicts future environmental conditions for the room or group of rooms as appropriate. Each predictor 70a-d implements a random neural network model to predict the future environmental conditions for the associated room or group of rooms. The random neural network for each predictor 70a-d has been at least partially and preferably wholly trained with input data (e.g. historical and/or archived input data) associated with the relevant room or group. In this way, the random neural network used by each predictor 70a-d is specific to the associated room or group of rooms.

The predicted future environmental conditions for each room or group of rooms are then passed from the predictors 70a-d to the optimisers 60a-d. As for the predictors 70a-d, a separate optimiser 60a-d is provided for each room in the small room system 5' of Figures 2 and 3 and for each group of rooms in the large building system 5" of Figures 4 and 5. Each optimiser 60a-d implements a random neural network that has been at least partially and preferably wholly trained with input data (e.g. historical and/or archived input data) associated with the relevant room or group of rooms, as appropriate. In this way, the random neural network used by each optimiser 60a-d is specific to the associated room or group of rooms.

The random neural network model used by each optimiser 60a-d is trained with the historical and/or archive input data specific to the associated room or group of rooms such that it is operable to calculate optimized output control parameters for controlling the building control apparatus 95 that maintain the environmental conditions in that room or group of rooms for the input variables supplied to it. These output control parameters are then communicated from the optimisers 60a-d to the appropriate building control apparatus 95 in order to optimise the environmental control of the room or groups of rooms.

As detailed above, different system configurations 5', 5" and approaches can be taken depending on whether the building is a small building such as a basic house or a large building such as an office block.

Figures 2 and 3 illustrate examples of system configurations 5' for use in a small building. Like numerals indicate equivalent or analogous components to those described in relation to other embodiments. The exemplary system 5' of Figure 2 relates to a building having two rooms 105a, 105b, but it will be appreciated that the same system could be scaled to other numbers of rooms. The system 5' comprises an apparatus 100' comprising a controller 10', a user interface 15', a communications controller 20' for communicating on the wireless network 25 and a weather interface 45'. The controller 10' comprises two room specific predictors 70'a-b and two room specific optimizers 60'a-b that implement random neural networks that have been at least partially trained with data associated with the relevant room 105a, 105b of the building.

Each room 105a, 105b comprises a plurality of indoor sensors for monitoring environmental conditions within the respective room 105a, 105b such as a temperature sensor 40'a, a humidity sensor 40'b and/or a solar radiation sensor 40'c,. The sensors 40'a-40'c for each room 105a, 105b are each connected to a respective sensor interface 30' for the room 105a, 105b. One or more outdoor sensors, such as an outdoor temperature sensor 40'd for determining the conditions in an outdoor area adjacent the respective room 105a, 105b are also connect to the respective sensor interfaces 30'.

Each room 105a, 105b is also provided with building control apparatus 95', in this case in the form of an air conditioning unit and a radiator provided with TRVs. The radiators are supplied with hot water from a central boiler via the TRVs. In this case, the boiler, the TRVs and the air conditioning unit are all controllable according to control parameters determined and communicated by the controller 10' via the network 25.

For example, the radiators in each room are controlled with a respective motorised thermostatic radiator valve $TRV_{j=s,l,m,fo}^{i=1,...n}$ that can be controlled through a network 25. Each motorised TRV has, for example, four settings, i.e. s = shut, l = low, m = medium and fo = fully open. The TRVs control the flowrate of hot water m in the respective radiators and heat emission from the respective radiators can be controlled by varying the flowrate of hot water through the radiator using the TRVs.

An optimisation process carried out by the controller 10' suitable for a small building is illustrated by Figure 3, which relates to an embodiment having three rooms, in order to illustrate the scalability of the present invention. In particular, input variables including historical data such as historical input variables, set-points, corresponding TRV settings and weather parameters supplied from the database 55' and current environmental conditions of the rooms as measured by the sensors 40'a-c are provided to the task scheduler 80'. The task scheduler 80' receives, groups and queues the input variables for each room and provides the input variables for each room to the model selector 75'. The model selector determines which predictor 70'a-c and optimiser 60'a-c should be used for each room and provides the appropriate input to the appropriate predictor 70'a-c and optimiser 60'a-c. The input data for each room is then processed by the appropriate predictor 70'a-c to generate predicted environmental parameters for the associated room. The predicted environmental parameters for each room are then input to the appropriate optimiser 60'a-c along with the other input variables. The optimisers 60'a-c then determine the optimal settings for the environmental control parameters, such as TRV and AC settings, for the associated room using the relevant random neural network. These settings can then be subtracted from historical energy consumption data, for example, in order to determine the control parameters giving the best output parameters for lowest energy consumption. Although energy consumption is given as an example, it will be appreciated that other optimisation criteria could be used instead.

Equivalent systems 5" can also be provided for larger buildings, as illustrated by Figures 4 and 5. These systems 5" are generally similar to the small building systems 5' described in relation to Figures 2 and 3. However, in order to minimise processing requirements in the large building systems 5", building maps comprising or being usable to derive the room properties are provided to the controller 10" via the building management interface 90. Each room of the building can then be classified and associated with an appropriate group depending on the room properties meeting a preset or predetermined similarity criteria. Each room is provided with a plurality of associated sensors 40"a-d, connected to the controller 10" via respective sensor interfaces 30" in order to provide input variables in the form of measured environmental properties associated with the rooms.

The controller 10" comprises a predictor 70"a-d and an optimiser 60"a-d for each group of rooms. The model selector 75" is operable to receive the input variables associated with a particular room along with the room information for that room. The model selector 75" is then operable to determine the group of rooms to which the particular room belongs, using the similarity criteria, and communicate the input data associated with that room to an appropriate predictor 70"a-d and optimiser 60"a-d so that a suitably trained random neural network can be used in each.

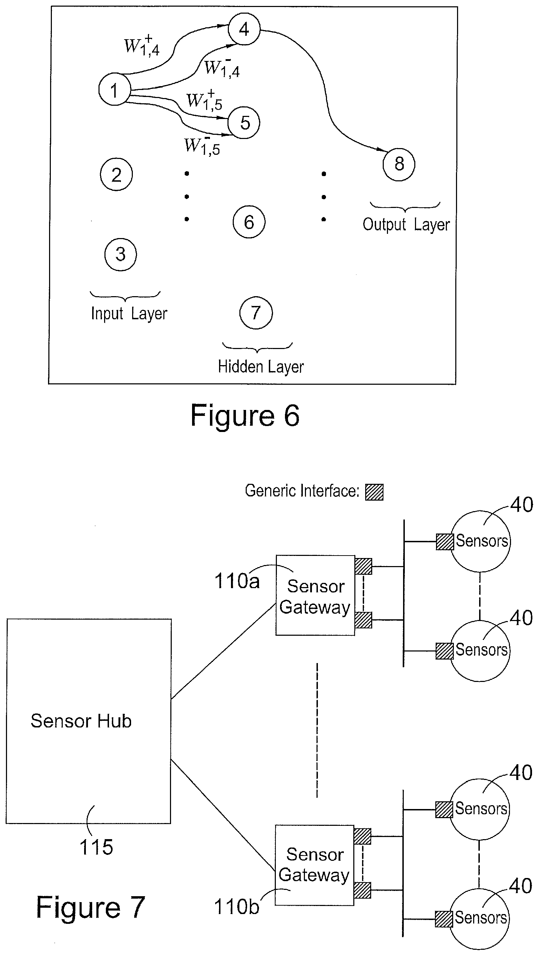

In the present invention, both the predictors 70a-d and the optimizers 60a-d advantageously use random neural networks to predict future environmental parameters and to determine optimal control parameters for the building control apparatus respectively. Examples of suitable random neural networks are illustrated with reference to Figure 6.

The present invention uses random neural network models, also known as G-Networks, which are open Markovian queuing networks with positive and negative signals in the form of spikes. The models comprise pseudo-neurons and signals arriving at a neuron can be either from outside the network or from another neuron within the network. A neuron may fire if its potential is positive at a given time t. The negative signal arriving at a neuron reduces its potential by -1 from its existing value and has no effect if it is zero. According to a Poisson process, the rate of positive signals arriving at the $i^{th}$ neuron is denoted as $\Lambda_i$ and the rate of negative signals arriving at the $i^{th}$ neuron is denoted as $\lambda_i$.

When a positive signal leaves neuron $i$ it heads to neuron $j$ with probability of $p_{ij}^{+}$. Similarly, when a negative signal leaves neuron $i$ it heads to neuron $j$ with probability of $p_{ij}^{-}$. The probability of a signal departing from the network from neuron i is $d_i$. Signals leaving a neuron are not allowed to return directly back to same neuron, i.e. $p(i, j)=0$. Therefore, for N neurons, $i=1,...,N$ and

$$\sum_{d_i+_j=1}^{N}(p_{ij}^{+}+p_{ij}^{-})=1 \quad \text{(Equation 1)}$$

The rates at which each neuron $i$ fires positive and negative signals when it is excited are denoted as:

$$w_{ij}^{+}=r_i p_{ij}^{+} \geq 0 \quad \text{(Equation 2)}$$

$$w_{ij}^{-}=r_i p_{ij}^{-} \geq 0 \quad \text{(Equation 3)}$$

The Poisson firing rate $r_i$ with an exponential distributed interim pulse interval is:

$$\sum_{r_i=j} w_{ij}^{+}+w_{ij}^{-} \quad \text{(Equation 4)}$$

At time *t*, the network state is described by a vector *k(t)=k1(t), ...,kn(t).*

The stationary probability distribution *p(k)* is denoted by:

$$p_{(k)} = \lim_{t \to \infty} \Pr ob\left[k_{(t)} = k\right] \quad \text{(Equation 5)}$$

The quantity $q_i$ is defined as:

$$q_i = \frac{\lambda^+(i)}{r(i) + \lambda^-(i)} \quad \text{(Equation 6)}$$

The positive $\lambda_{(i)}^+$ and negative $\lambda_{(i)}^-$ total arrival rates for i=1...n satisfy the following system of non-linear simultaneous equations:

$$\lambda^+(i) = \wedge_i + \sum_j q_j r_j p^+_{(ji)} \quad \text{(Equation 7)}$$

$$\lambda^-(i) = \lambda_i + \sum_j q_j r_j p^-_{(ji)} \quad \text{(Equation 8)}$$

Where,

$$0 \leq q_i = \frac{\Lambda_i + \sum_j q_j r_j p_{ji}^+}{r_i + \lambda_i + \sum_j q_j r_j p_{ji}^-} < 1 \quad \text{(Equation 9)}$$

If a non-negative solution $\{\lambda_{(i)}^+, \lambda_{(i)}^-\}$ exists for the Equations 6, 7 and 8 such that $q_i < 1$, then

$$p_{(k)} = \prod_{i=1}^{N} [1 - q_i] q_i^{ki} \quad \text{(Equation 10)}$$

This means that Equation 9 can be found from Equations 7, 8 and 9. The network is stable, which guarantees the excitation level of each neuron remains finite with probability 1. As such it is possible to simply calculate the average potential at a neuron *i* as $q_i$*=(1-qi).* If $q_i = \frac{\lambda_{(i)}^+}{r_i + \lambda_i^-} > 1$, then the neuron *i* is saturated or unstable and continuously fires in a steady state.

Two types of Random Neural Networks are available, feed forward architectures and Recurrent architectures. However, the present invention preferably uses a Feedforward Architecture, as illustrated in Figure 6.

Further information on Random Neural Networks and their implementation can be found, for example, in "E. Gelenbe, Random neural networks with negative and positive signals and product form solution, Neural Comput. 1 (4) (1989) 502-510", in "E. Gelenbe, Stability of the random neural network model, Neural Comput. 2 (2) (1990) 239-247", and in "E. Gelenbe, K. Hussain, Learning in the multiple class random neural network, IEEE Trans. Neural Netw. 13 (6) (2002) 1257-1267".

In contrast to many prior art building environmental management systems that only use a single sensor, such as a temperature sensor for a building or at least for large parts of a building, the system 5 of the present invention requires inputs to be collected from a plurality of sensors 40a-d for each room or group of rooms. This may results in problems in incorporating a number of disparate sensor types.

An example of a sensor arrangement that could be used with the present invention is illustrated with reference to Figure 7. In this arrangement, instead of having a number of types of sensor connectors in hubs 115 of the sensor interfaces 30, each sensor 40a-d is provided with a generic connector that connects to a sensor gateway 110, and a different sensor gateway 110a, 110b can be provided for each sensor type. This arrangement can potentially increase the scalability and/or adaptability of the hub 115, as it can potentially be used in different sensor networks as well as maximising the exploitation of the sensor channels on the sensor.

It should be understood that the embodiments described herein are merely exemplary and that various modifications may be made thereto without departing from the scope of the present invention.

For example, although the examples described above describe a controller 10 or apparatus 100' having various functional components, such as a core interface, a task scheduler, a model selector, a plurality of predictors and a plurality of optimisers, it will be appreciated that various of these functional modules may be provided in hardware and/or software and/or combinations of each. For example, embodiments of the present invention can be implemented as a computer-implemented system, method and computer program product which may be stored on a non-transitory medium. However, although some of the present embodiments are described in terms of a computer program product that causes a computer, for example a personal computer or other form of workstation, to provide the functionality associated with some embodiments of the invention, it will be appreciated from the following description that this relates to only one example of some embodiments of the present invention. For example, in some embodiments of the invention, a network of computers, rather than a stand-alone computer, may implement the embodiments of the invention. Alternatively, or in addition, at least some of the functionality of the invention may be implemented by means of special purpose hardware, for example in the form of special purpose integrated circuits (e.g., Application Specific Integrated Circuits (ASICs) or the like).

Furthermore, although various examples of sensor types and arrangements have been described, it will be appreciated that other sensor types and arrangements may be alternatively or additionally used.

In addition, whilst specific examples of random neural networks are described, it will be appreciated that other types or embodiments of random neural networks could be used instead.

Whilst examples of controllers 10, 10' and 10" and apparatus 100' have been described as comprising various functional modules such as a core interface, a task scheduler, a model selector, a plurality of predictors and a plurality of optimisers, it will be appreciated that not all of these modules may be provided or the modules may be arranged differently.

Furthermore, whilst various examples of input parameters and various examples of environmental control apparatus are given, it will be appreciated that the system 5, 5', 5" and controller 10, 10'and 10" of the present invention is operable with alternative or additional input parameters and/or environmental control apparatus.

## Claims

1. A controller (10) for controlling at least one service apparatus (95) for a building or one or more parts (105a, 105b) of a building, wherein the at least one service apparatus (95) comprises environmental control apparatus comprising at least one of: a thermostatic radiator valve, a central heating boiler or controller, an air conditioning unit, a heating, ventilation and air conditioning (HVAC) unit and/or a building management system; the controller comprising:

   at least one input interface for receiving a plurality of input variables associated with the building or the one or more parts of the building;
   at least one output interface for interfacing with the at least one service apparatus; and
   processing apparatus configured to process the plurality of input variables using one or more random neural networks in order to generate one or more control parameters for controlling the at least one service apparatus; and
   **characterised in that**
   the controller or processing apparatus comprises or is configured to use or implement a plurality of random neural networks and the controller or processing apparatus comprises, is configured to use or implements, a selector (75) for selecting a random neural network from the plurality of neural networks dependent on the part of the building associated with the input variables;
   the selector (75) is configured to select a random neural network specific or tailored to the part (105a, 105b) of the building associated with at least one and/or each of the input variables in order to generate one or more control parameters for controlling the at least one service apparatus (95) associated with that part (105a, 105b) of the building;
   each random neural network is at least initially trained with historical input variables and/or historical control parameters for the associated part (105a, 105b) of the building;
   at least one and/or each of the random neural networks are associated with parts of the building having one or more properties meeting one or more criteria and the selector is configured to select the random neural network based on matching the properties of the part of the building associated with the input variables or to which the input variables relate to the one or more criteria; and
   the one or more parts (105a, 105b) of the building comprise portions of the building, rooms and/or groups of rooms linked by the one or more criteria, wherein the criteria specify one or more room dimension, orientation of the room, aspect of the room and/or number, size and/or positions of windows in the room.

2. The controller (10) according to claim 1, wherein at least one of the input interfaces (15, 30) comprises one or more sensor interfaces (30) for receiving measurements from one or more sensors (40) and at least one of the input variables comprise or are derived from the measurements received from the plurality of sensors (40).

3. The controller (10) according to any preceding claim, wherein a user interface (15) of the controller (10) and/or the controller (10) comprise or are comprised in or be configured to communicate with at least one of a mobile smartphone, tablet computer, laptop computer, smart TV, games console, smart meter and/or watch.

4. The controller (10) according to any preceding claim, wherein the controller (10) or processing apparatus comprises, implements or is configured to access at least one predictor (70a-70d) for predicting at least one future input variable or environmental condition associated with the building and the output of the predictor (70a-70d) comprises or is comprised in or is usable to derive one or more of the plurality of input variables.

5. The controller (10) according to claim 4, wherein the predictor (70a-70d) is configured to use one or more random neural network models in order to predict the at least one future environmental condition.

6. The controller (10) according to claim 4 or claim 5, wherein at least one or each predictor (70a-70d) is associated with a respective part of the building and the at least one or each predictor (70a-70d) is configured to predict at least one future environmental condition for the associated part of the building.

7. The controller (10) according to any preceding claim, wherein the controller (10) or processing apparatus comprises, implements or is configured to access one or more optimisers (60a-60d), wherein each optimiser (60a-60d) uses the one or more random neural networks to calculate optimal control parameters for the at least one service apparatus (95).

8. The controller (10) according to claim 7, wherein the input variables for the random neural network(s) of the optimiser(s) comprise at least one or each of one or more indoor environmental conditions, an outdoor condition, a user input, at least one future parameter predicted by the future parameter predictor and/or one or more historical input variables and/or parameters stored in the database; wherein the output of the random neural network of the optimiser(s) comprises, or is usable to derive, one or more control parameters of the at least one service apparatus (95).

9. The controller (10) according to claim 7 or claim 8, wherein the controller (10) or processing apparatus comprises or is configured to implement a plurality of optimisers (60a-60d), wherein each optimiser (60a-60d) is associated with a part (105a, 105b) of the building meeting at least one common specified or pre-set criteria, wherein the random neural network used in the optimiser (60a-60d) for a part (105a, 105b) of the building may be at least initially trained using historical environmental conditions and/or control parameters for the associated part (105a, 105b) of the building and each optimiser (60a-60d) is configured to output one or more control parameters of the at least one service apparatus (95) associated with the associated part (105a, 105b) of the building.

10. A method of controlling at least one service apparatus (95) for a building or one or more parts (105a, 105b) of a building, **characterised in that** the method comprises:

receiving a plurality of input variables or environmental conditions associated with the building or the one or more parts (105a, 105b) of the building;
selecting at least one random neural network from the plurality of neural networks dependent on the part (105a, 105b) of the building; and
processing the plurality of input variables or environmental conditions using the at least one random neural network in order to generate one or more control parameters for controlling the at least one service apparatus (95).

11. The method of claim 10, the method being implemented using or by a controller (10) according to any of claims 1 to 9.

12. An environmental management system for a building, the environmental management system comprising a controller (10) according to any of claims 1 to 9 or adapted to implement the method of claim 10 or 11.

13. The environmental management system of claim 12, comprising one or more sensors (40a-40d) and/or one or more sensor interfaces (30) and/or at least one service apparatus (5) in the form of an environmental control apparatus and/or a database and/or at least one interface or connection to a weather information system (50).

**14.** A computer program product that, when processed by a processing device or controller for controlling at least one service apparatus (95) for a building or one or more parts (105a, 105b) of a building, is configured cause the processing device or controller to implement the method of claim 10 or claim 11.

## Patentansprüche

**1.** Steuerung (10) zum Steuern mindestens einer Dienstvorrichtung (95) für ein Gebäude oder einen oder mehrere Teile (105a, 105b) eines Gebäudes, wobei die mindestens eine Dienstvorrichtung (95) eine Umgebungssteuervorrichtung umfasst, die mindestens eines von Folgendem umfasst: ein thermostatisches Heizkörperventil, einen Zentralheizungskessel oder eine Zentralheizungssteuerung, eine Klimatisierungseinheit, eine Heizungs-, Lüftungs- und Klimatisierungs(HVAC)-Einheit und/oder ein Gebäudeverwaltungssystem; wobei die Steuerung Folgendes umfasst:

mindestens eine Eingabeschnittstelle zum Empfangen einer Vielzahl von Eingabevariablen, die mit dem Gebäude oder dem einen oder den mehreren Teilen des Gebäudes verknüpft sind;
mindestens eine Ausgabeschnittstelle zum Koppeln an die mindestens eine Dienstvorrichtung und
eine Verarbeitungsvorrichtung, die dazu ausgelegt ist, die Vielzahl von Eingabe variablen unter Verwendung von einem oder mehreren zufälligen neuronalen Netzwerken zu verarbeiten, um einen oder mehrere Steuerparameter zum Steuern der mindestens einen Dienstvorrichtung zu erzeugen; und **dadurch gekennzeichnet, dass**
die Steuerung oder die Verarbeitungsvorrichtung eine Vielzahl von zufälligen neuronalen Netzwerken umfasst oder dazu ausgelegt ist, diese zu verwenden oder zu implementieren, und die Steuerung oder die Verarbeitungsvorrichtung einen Auswähler (75) umfasst, dazu ausgelegt ist, diesen zu verwenden, oder diesen implementiert, um in Abhängigkeit von dem Teil des Gebäudes, der mit den Eingabevariablen verknüpft ist, ein zufälliges neuronales Netzwerk aus der Vielzahl von neuronalen Netzwerken auszuwählen;
der Auswähler (75) dazu ausgelegt ist, ein zufälliges neuronales Netzwerk auszuwählen, das für den Teil (105a, 105b) des Gebäudes, der mit der mindestens einen und/oder mit jeder der Eingabevariablen verknüpft ist, spezifisch oder maßgeschneidert ist, um einen oder mehrere Steuerparameter zum Steuern der mindestens einen Dienstvorrichtung (95), die mit dem Teil (105a, 105b) des Gebäudes verknüpft ist, zu erzeugen;
jedes zufällige neuronale Netzwerk mit historischen Eingabevariablen und/oder historischen Steuerparametern für den verknüpften Teil (105a, 105b) des Gebäudes mindestens anfänglich trainiert wird;
mindestens ein und/oder jedes der zufälligen neuronalen Netzwerke mit Teilen des Gebäudes verknüpft sind, die eine oder mehrere Eigenschaften aufweisen, die ein oder mehrere Kriterien erfüllen, und der Auswähler dazu ausgelegt ist, das zufällige neuronale Netzwerk auf Basis eines Abgleichs der Eigenschaften des Teils des Gebäudes, der mit den Eingabevariablen verknüpft ist oder auf den sich die Eingabevariablen beziehen, mit dem einen oder den mehreren Kriterien auszuwählen; und
der eine oder die mehreren Teile (105a, 105b) des Gebäudes Abschnitte des Gebäudes, Zimmer und/oder Gruppen von Zimmern umfassen, die durch das eine oder die mehreren Kriterien verbunden sind, wobei die Kriterien eines oder mehrere einer Zimmerabmessung, einer Ausrichtung des Zimmers, eines Seitenverhältnisses des Zimmers und/oder einer Anzahl, einer Größe und/oder von Positionen von Fenstern im Zimmer spezifizieren.

**2.** Steuerung (10) nach Anspruch 1, wobei mindestens eine der Eingabeschnittstellen (15, 30) eine oder mehrere Sensorschnittstellen (30) zum Empfangen von Messungen von einem oder mehreren Sensoren (40) umfasst und mindestens eine der Eingabevariablen die Messungen, die von der Vielzahl von Sensoren (40) empfangen wurden, umfassen oder von diesen abgeleitet sind.

**3.** Steuerung (10) nach einem der vorhergehenden Ansprüche, wobei eine Benutzerschnittstelle (15) der Steuerung (10) und/oder die Steuerung (10) mindestens eines von einem mobilen Smartphone, einem Tabletcomputer, einem Laptopcomputer, einem intelligenten TV, einer Spielekonsole, einem intelligenten Zähler und/oder einer Uhr umfassen oder darin enthalten sind oder dazu ausgelegt sind, mit diesen zu kommunizieren.

**4.** Steuerung (10) nach einem der vorhergehenden Ansprüche, wobei die Steuerung (10) oder die Verarbeitungsvorrichtung mindestens einen Vorhersager (70a-70d) zum Vorhersagen mindestens einer zukünftigen Eingabevariable oder Umgebungsbedingung, die mit dem Gebäude verknüpft ist, umfasst, implementiert oder dazu ausgelegt ist, auf diesen zuzugreifen, und die Ausgabe des Vorhersagers (70a-70d) eine oder mehrere der Vielzahl von Eingabevariablen umfasst oder darin enthalten ist oder verwendbar ist, diese abzuleiten.

**5.** Steuerung (10) nach Anspruch 4, wobei der Vorhersager (70a-70d) dazu ausgelegt ist, ein oder mehrere zufällige neuronale Netzwerkmodelle zu verwenden, um die mindestens eine zukünftige Umgebungsbedingung vorherzusagen.

**6.** Steuerung (10) nach Anspruch 4 oder 5, wobei der mindestens eine oder jeder Vorhersager (70a-70d) mit einem jeweiligen Teil des Gebäudes verknüpft ist und der mindestens eine oder jeder Vorhersager (70a-70d) dazu ausgelegt ist, mindestens eine zukünftige Umgebungsbedingung für den verknüpften Teil des Gebäudes vorherzusagen.

**7.** Steuerung (10) nach einem der vorhergehenden Ansprüche, wobei die Steuerung (10) oder die Verarbeitungsvorrichtung einen oder mehrere Optimierer (60a-60d) umfasst, implementiert oder dazu ausgelegt ist, auf diesen zuzugreifen, wobei jeder Optimierer (60a-60d) das eine oder die mehreren zufälligen neuronalen Netzwerke verwendet, um optimale Steuerparameter für die mindestens eine Dienstvorrichtung (95) zu berechnen.

**8.** Steuerung (10) nach Anspruch 7, wobei die Eingabevariablen für das zufällige neuronale Netzwerk bzw. die zufälligen neuronalen Netzwerke des Optimierers bzw. der Optimierer mindestens eine oder jede von einer oder mehreren Umgebungsinnenbedingungen, eine Außenbedingung, eine Benutzereingabe, mindestens einen zukünftigen Parameter, der vom zukünftigen Parametervorhersager vorhergesagt wird, und/oder eine oder mehrere historische Eingabevariablen und/oder Parameter, die in der Datenbank gespeichert sind, umfassen; wobei die Ausgabe des zufälligen neuronalen Netzwerks des Optimierers bzw. der Optimierer einen oder mehrere Steuerparameter der mindestens einen Dienstvorrichtung (95) umfasst oder verwendbar ist, um diese abzuleiten.

**9.** Steuerung (10) nach Anspruch 7 oder 8, wobei die Steuerung (10) oder die Verarbeitungseinrichtung eine Vielzahl von Optimierern (60a-60d) umfasst oder dazu ausgelegt ist, diese zu implementieren, wobei jeder Optimierer (60a-60d) mit einem Teil (105a, 105b) des Gebäudes verknüpft ist, der mindestens ein allgemeines spezifiziertes oder voreingestelltes Kriterium erfüllt, wobei das zufällige neuronale Netzwerk, das im Optimierer (60a-60d) für einen Teil (105a, 105b) des Gebäudes verwendet wird, unter Verwendung von historischen Umgebungsbedingungen und/oder Steuerparametern für den verknüpften Teil (105a, 105b) des Gebäudes mindestens anfänglich trainiert werden kann und jeder Optimierer (60a-60d) dazu ausgelegt ist, einen oder mehrere Steuerparameter der mindestens einen Dienstvorrichtung (95), die mit dem verknüpften Teil (105a, 105b) des Gebäudes verknüpft ist, auszugeben.

**10.** Verfahren zum Steuern mindestens einer Dienstvorrichtung (95) für ein Gebäude oder einen oder mehrere Teile (105a, 105b) eines Gebäudes, **dadurch gekennzeichnet, dass** das Verfahren Folgendes umfasst
Empfangen einer Vielzahl von Eingabevariablen oder Umgebungsbedingungen, die mit dem Gebäude oder dem einen oder den mehreren Teilen (105a, 105b) des Gebäudes verknüpft sind;
Auswählen von mindestens einem zufälligen neuronalen Netzwerk aus der Vielzahl von neuronalen Netzwerken in Abhängigkeit vom Teil (105a, 105b) des Gebäudes; und
Verarbeiten der Vielzahl von Eingabevariablen oder Umgebungsbedingungen unter Verwendung des mindestens einen zufälligen neuronalen Netzwerks, um einen oder mehrere Steuerparameter zum Steuern der mindestens einen Dienstvorrichtung (95) zu erzeugen.

**11.** Verfahren nach Anspruch 10, wobei das Verfahren unter Verwendung einer Steuerung (10) nach einem der Ansprüche 1 bis 9 oder durch diese implementiert wird.

**12.** Umgebungsverwaltungssystem für ein Gebäude, wobei das Umgebungsverwaltungssystem eine Steuerung (10) nach einem der Ansprüche 1 bis 9 umfasst oder angepasst ist, das Verfahren nach Anspruch 10 oder 11 zu implementieren.

**13.** Umgebungsverwaltungssystem nach Anspruch 12, das einen oder mehrere Sensoren (40a-40d) und/oder eine oder mehrere Sensorschnittstellen (30) und/oder mindestens eine Dienstvorrichtung (5) in Form einer Umgebungssteuervorrichtung und/oder eine Datenbank und/oder mindestens eine Schnittstelle oder Verbindung zu einem Wetterinformationssystem (50) umfasst.

**14.** Computerprogrammprodukt, das, wenn es von einer Verarbeitungseinrichtung oder einer Steuerung zum Steuern von mindestens einer Dienstvorrichtung (95) für ein Gebäude oder einen oder mehrere Teile (105a, 105b) eines Gebäudes verarbeitet wird, dazu ausgelegt ist, die Verarbeitungseinrichtung oder die Steuerung zu veranlassen, das Verfahren nach Anspruch 10 oder 11 zu implementieren.

## Revendications

**1.** Contrôleur (10) destiné à commander au moins un appareil de service (95) pour un bâtiment ou une ou plusieurs parties (105a, 105b) d'un bâtiment, dans lequel ledit au moins un appareil de service (95) comprend un appareil de régulation climatique comprenant au moins l'un des éléments parmi : une vanne de radiateur thermostatique, un contrôleur ou une chaudière de chauffage central, une unité de climatisation, une unité de chauffage, de ventilation et de climatisation (HVAC) et/ou un système de gestion de bâtiment ; le contrôleur comprenant :

au moins une interface d'entrée destinée à recevoir une pluralité de variables d'entrée associées au bâtiment ou à ladite une ou auxdites plusieurs parties du bâtiment ;
au moins une interface de sortie destinée à s'interfacer avec ledit au moins un appareil de service ; et
un appareil de traitement configuré de manière à traiter la pluralité de variables d'entrée, en utilisant un ou plusieurs réseaux neuronaux aléatoires, afin de générer un ou plusieurs paramètres de commande permettant de commander ledit au moins un appareil de service ; et **caractérisé en ce que** :

le contrôleur ou l'appareil de traitement comprend, ou est configuré de manière à utiliser ou à mettre en oeuvre, une pluralité de réseaux neuronaux aléatoires, et le contrôleur ou l'appareil de traitement comprend, est configuré de manière à utiliser, ou met en oeuvre, un sélecteur (75) pour sélectionner un réseau neuronal aléatoire parmi la pluralité de réseaux neuronaux en fonction de la partie du bâtiment associée aux variables d'entrée ;
le sélecteur (75) est configuré de manière à sélectionner un réseau neuronal aléatoire spécifique ou adapté à la partie (105a, 105b) du bâtiment associée à au moins l'une et/ou à chacune des variables d'entrée, afin de générer un ou plusieurs paramètres de commande permettant de commander ledit au moins un appareil de service (95) associé à cette partie (105a, 105b) du bâtiment ;
chaque réseau neuronal aléatoire est au moins initialement formé avec des variables d'entrée historiques et/ou des paramètres de commande historiques pour la partie associée (105a, 105b) du bâtiment ;
au moins l'un et/ou chacun des réseaux neuronaux aléatoires est associé à des parties du bâtiment présentant une ou plusieurs propriétés répondant à un ou plusieurs critères, et le sélecteur est configuré de manière à sélectionner le réseau neuronal aléatoire sur la base d'une correspondance entre les propriétés de la partie du bâtiment associée aux variables d'entrée, ou à laquelle les variables d'entrée se rapportent, et ledit un ou auxdits plusieurs critères ; et
ladite une ou lesdites plusieurs parties (105a, 105b) du bâtiment comprennent des parties du bâtiment, des pièces et/ou des groupes de pièces lié(e)s par ledit un ou lesdits plusieurs critères, dans lequel les critères spécifient une ou plusieurs dimensions de pièce, l'orientation de la pièce, l'aspect de la pièce et/ou le nombre, la taille et/ou les positions des fenêtres dans la pièce.

**2.** Contrôleur (10) selon la revendication 1, dans lequel au moins l'une des interfaces d'entrée (15, 30) comprend une ou plusieurs interfaces de capteurs (30) pour recevoir des mesures en provenance d'un ou plusieurs capteurs (40), et dans lequel au moins l'une des variables d'entrée comprend ou est dérivée des mesures reçues en provenance de la pluralité de capteurs (40).

**3.** Contrôleur (10) selon l'une quelconque des revendications précédentes, dans lequel une interface utilisateur (15) du contrôleur (10), et/ou le contrôleur (10), comprennent ou sont compris dans, ou sont configurés de manière à communiquer avec au moins un téléphone intelligent mobile, un ordinateur tablette, un ordinateur portable, une télévision intelligente, une console de jeux, un compteur intelligent et/ou une montre.

**4.** Contrôleur (10) selon l'une quelconque des revendications précédentes, dans lequel le contrôleur (10) ou l'appareil de traitement comprend, met en oeuvre ou est configuré de manière à accéder à, au moins un prédicteur (70a-70d), destiné à prédire au moins une variable d'entrée future ou une condition climatique future associée au bâtiment, et la sortie du prédicteur (70a-70d) comprend ou est comprise dans ou est utilisable pour dériver une ou plusieurs variables de la pluralité de variables d'entrée.

**5.** Contrôleur (10) selon la revendication 4, dans lequel le prédicteur (70a-70d) est configuré de manière à utiliser un ou plusieurs modèles de réseaux neuronaux aléatoires afin de prédire au moins une condition climatique future.

**6.** Contrôleur (10) selon la revendication 4 ou 5, dans lequel au moins un ou chaque prédicteur (70a-70d) est associé à une partie respective du bâtiment, et ledit au moins un ou chaque prédicteur (70a-70d) est configuré de manière à prédire au moins une condition climatique future pour la partie associée du bâtiment.

**7.** Contrôleur (10) selon l'une quelconque des revendications précédentes, dans lequel le contrôleur (10) ou l'appareil de traitement comprend, met en oeuvre ou est configuré de manière à accéder à, un ou plusieurs optimiseurs (60a-60d), dans lequel chaque optimiseur (60a-60d) utilise ledit un ou lesdits plusieurs réseaux neuronaux aléatoires en vue de calculer des paramètres de commande optimaux pour ledit au moins un appareil de service (95).

**8.** Contrôleur (10) selon la revendication 7, dans lequel les variables d'entrée pour le ou les réseaux neuronaux aléatoires du ou des optimiseurs comprennent au moins une ou chacune parmi une ou plusieurs conditions climatiques intérieures, une condition extérieure, une entrée utilisateur, au moins un paramètre futur prédit par le prédicteur de paramètres futurs et/ou une ou plusieurs variables d'entrée historiques et/ou un ou plusieurs paramètres d'entrée historiques stockés dans la base de données ; dans lequel la sortie du réseau neuronal aléatoire du ou des optimiseurs comprend, ou est utilisable en vue de dériver, un ou plusieurs paramètres de commande dudit au moins un appareil de service (95).

**9.** Contrôleur (10) selon la revendication 7 ou 8, dans lequel le contrôleur (10) ou l'appareil de traitement comprend ou est configuré de manière à mettre en oeuvre une pluralité d'optimiseurs (60a-60d), dans lequel chaque optimiseur (60a-60d) est associé à une partie (105a, 105b) du bâtiment répondant à au moins un critère commun spécifié ou prédéfini, dans lequel le réseau neuronal aléatoire utilisé dans l'optimiseur (60a-60d) pour une partie (105a, 105b) du bâtiment peut être au moins initialement formé en utilisant des conditions climatiques historiques et/ou des paramètres de commande pour la partie associée (105a, 105b) du bâtiment, et chaque optimiseur (60a-60d) est configuré de manière à fournir en sortie un ou plusieurs paramètres de commande dudit au moins un appareil de service (95) associé à la partie associée (105a, 105b) du bâtiment.

**10.** Procédé de commande d'au moins un appareil de service (95) pour un bâtiment ou une ou plusieurs parties (105a, 105b) d'un bâtiment, **caractérisé en ce que** le procédé comprend les étapes ci-dessous consistant à :

recevoir une pluralité de variables d'entrée ou de conditions climatiques associées au bâtiment ou à une ou plusieurs parties (105a, 105b) du bâtiment ;
sélectionner au moins un réseau neuronal aléatoire parmi la pluralité de réseaux neuronaux en fonction de la partie (105a, 105b) du bâtiment ; et
traiter la pluralité de variables d'entrée ou de conditions climatiques en utilisant ledit au moins un réseau neuronal aléatoire afin de générer un ou plusieurs paramètres de commande permettant de commander ledit au moins un appareil de service (95).

**11.** Procédé selon la revendication 10, dans lequel le procédé est mis en oeuvre en utilisant ou par un contrôleur (10) selon l'une quelconque des revendications 1 à 9.

**12.** Système de gestion climatique pour un bâtiment, le système de gestion climatique comprenant un contrôleur (10) selon l'une quelconque des revendications 1 à 9, ou étant apte à mettre en oeuvre le procédé selon la revendication 10 ou 11.

**13.** Système de gestion climatique selon la revendication 12, comprenant un ou plusieurs capteurs (40a-40d) et/ou une ou plusieurs interfaces de capteurs (30) et/ou au moins un appareil de service (5) sous la forme d'un appareil de régulation climatique et/ou d'une base de données et/ou d'au moins une interface ou d'au moins une connexion à un système d'informations météorologiques (50).

**14.** Produit-programme informatique qui, lorsqu'il est traité par un dispositif de traitement ou un contrôleur pour commander au moins un appareil de service (95) pour un bâtiment ou une ou plusieurs parties (105a, 105b) d'un bâtiment, est configuré de manière à amener le dispositif de traitement ou le contrôleur à mettre en oeuvre le procédé selon la revendication 10 ou 11.

Basic Detached House Version
Overall Architecture of RNN Energy Controller
5
40a
40b
Temperature Sensor
Humidity Sensor
50
40d
35
30
40c
Weather Provider (optional)
Wireless Sensors Interface (1..n)
Solar Radiation Sensor
Outside Temperature Sensor
25
Wireless Network
15
45
65
User interface
Weather Interface (optional)
20
Data interface
RNN Controller
55
95
Database
Input variables Room 1
Input variables Room 2
Input variables Room 3
Input variables Room 4
Input variables Room 5
Input variables Room n
Core Interface
Task Scheduler
RNN Model Selector
Future Temp & Humidity RNN Predictor (room1)
Future Temp & Humidity RNN Predictor (room2)
Future Temp & Humidity RNN Predictor (room3)
Future Temp & Humidity RNN Predictor (roomn)
RNN Optimisers (room1)
RNN Optimisers (room2)
RNN Optimisers (room3)
RNN Optimisers (roomn)
Control Input TRV/AC Boiler
70a
60a
70b
60b
70c
60c
70d
60d
85
80
75
10

Figure 1

Sample 2 Room Implementation of Basic Detached House Version of RNN Intelligent Energy Controller
5'
Intelligent Energy Controller
User Interface
15'
RNN Controller
RNN Optimisers
60'
Future Temp & Humidity RNN Predictors
70'
10'
Weather Interface (optional)
Weather Interface (optional)
45
20'
100'
Data Interface
Database
55'
Wireless Network
25
Wireless Sensors Interface 1
30'
Temperature Sensor
40'a
105a
Humidity Sensor
40'b
Room 1
Solar Radiation Sensor
40'c
Outside Temperature Sensor
40'd
Air Conditioner
95'
TRV
95'
Wireless Sensors Interface 2
30'
Temperature Sensor
40'a
105b
Humidity Sensor
40'b
Room 2
Solar Radiation Sensor
40'c
Outside Temperature Sensor
40'd
Air Conditioner
95'
TRV
95'
Boiler 1
95'
Boiler Control signal from RNN Controller
AC Control signal from RNN Controller
TRV Control Signal from RNN Controller
AC Control signal from RNN Controller
TRV Control Signal from RNN Controller


Figure 2

Data Flow Diagram for basic Detached House
History Data collected from the Building
History Data of Energy Consumed
History Data of Input Variables
History Data of Setpoints
History Data of Corresponding TRV Settings
History Data of Weather Parameters
30'
Wireless Sensor Interface Room (1..n)
80'
Task Scheduler
75'
RNN Model Selector
70'a
Future Temp & Humidity RNN Predictor Model (Room 1)
70'b
Future Temp & Humidity RNN Predictor Model (Room 2)
70'c
Future Temp & Humidity RNN Predictor Model (Room n)
60'a
Random Neural Network Optimiser (Room 1)
60'b
Random Neural Network Optimiser (Room 2)
60'c
Random Neural Network Optimiser (Room n)
Optimised TRV / AC settings
Optimised TRV / AC settings
Optimised TRV / AC settings
Selector for best optimised TRV settings
Best Optimised TRV / AC settings

Figure 3

Large Building Version
Overall Architecture of RNN Intelligent Energy Controller
5"
40a"
40b"
Temperature Sensor
Humidity Sensor
50"
40d"
35"
30"
40c"
Weather Provider (optional)
Wireless Sensors Interface (1..n)
Solar Radiation Sensor
Outside Temperature Sensor
25
Wireless Network
Building Map Information
15"
45"
90"
User interface
Weather Interface (optional)
Building Management Interface
20"
65"
RNN Controller
95
Data interface
Input variables Room 1
Input variables Room 2
Input variables Room 3
Input variables Room 4
Input variables Room 5
Future temp & Humidity RNN Predictor (d1)
RNN Optimisers (d1)
55"
70"a
60"a
Future temp & Humidity RNN Predictor (d2)
RNN Optimisers (d2)
Database
Core Interface
Task Scheduler
RNN Model Selector
70"b
60"b
Control Input HVAC
Future temp & Humidity RNN Predictor (d3)
RNN Optimisers (d3)
85"
70"c
60"c
Future temp & Humidity RNN Predictor (dn)
RNN Optimisers (dn)
Input variables Roomn
80"
75"
70"d
60"d
10"

Figure 4

Data Flow Diagram for Large Building
History Data collected from the Building
History Data of Energy Consumed
History Data of Input Variables
History Data of Setpoints
History Data of Corresponding HVAC Settings
History Data of Weather Parameters
30"
Wireless Sensor Interface Room (1..n)
90
Building Management Interface
80"
Task Scheduler
75"
RNN Model Selector
70"a
70"b
70"c
Future Temp & Humidity RNN Predictor Model ($d_1$)
Future Temp & Humidity RNN Predictor Model ($d_2$)
Future Temp & Humidity RNN Predictor Model ($d_n$)
60"a
60"b
60"c
Random Neural Network Optimiser ($d_1$)
Random Neural Network Optimiser ($d_2$)
Random Neural Network Optimiser ($d_n$)
Optimised HVAC settings
Optimised HVAC settings
Optimised HVAC settings
+
–
–
+
–
+
Selector for best optimised HVAC settings
Best Optimised HVAC settings

Figure 5

$W^+_{1,4}$
$W^-_{1,4}$
$W^+_{1,5}$
$W^-_{1,5}$
1
2
3
4
5
6
7
8
Input Layer
Hidden Layer
Output Layer


Figure 6

Generic Interface:
40
Sensors
110a
Sensor Gateway
Sensor Hub
115
110b


Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007128783 A
- EP 2336834 A


### Non-patent literature cited in the description


- The Neurothermostat: Predictive Optimal Control of Residential Heating Systems. **MOZER.** Adv. In Neral Info. Proc. Systems. MIT Press, 1997, vol. 9, 953-959
- E. Gelenbe, Random neural networks with negative and positive signals and product form solution. *Neural Comput.,* 1989, vol. 1 (4), 502-510
- E. Gelenbe, Stability of the random neural network model. *Neural Comput.,* 1990, vol. 2 (2), 239-247
- **E. GELENBE ; K. HUSSAIN.** Learning in the multiple class random neural network. *IEEE Trans. Neural Netw.,* 2002, vol. 13 (6), 1257-1267